# EUROPÄISCHE PATENTANMELDUNG

(11) **EP 2 180 197 A2**
(43) Veröffentlichungstag der Anmeldung: **28.04.2010**
(21) Anmeldenummer: 10152941.0
(22) Anmeldetag: 26.09.2006
(51) Int. Cl.: F16B 5/02

(54) **Spezialmutter**

(30) Priorität: 26.09.2005 DE 202005015190 U
(62) Teilanmeldung aus: 06805343.8
(71) Anmelder: Acument GmbH & Co. OHG, 56567 Neuwied (DE)
(72) Erfinder: Hobbs, Robert, St. Albans, Hertfordshire (GB); Schroder, Colin, St. Albans, Hertfordshire (GB)
(74) Vertreter: Beck, Alexander

(57) **Zusammenfassung**

Spezialmutter (10) zur schwingungsgedämpften und elektro-korrosionsfreien Verbindung von Werkstücken (12, 14) aus unterschiedlichen Metallen mit Winkel- und Verschiebungstoleranzausgleich, wobei die Mutter (10) aus einem im Wesentlichen zylindrischen Körper (18) mit einer zentralen zentrischen Bohrung (20) mit einem Innengewinde besteht, der an dem den Werkstücken (12, 14) abgewandten Ende einen verbreiterten, T-förmigen Abschnitt (22) aufweist, und werkstücksseitig ein hohlzylindrisches, elastisch komprimierbares Gummi- oder Kunststoffteil (24) auf den nicht verbreiterten Abschnitt dieses zylindrischen Körpers (18) aufgesetzt oder aufgespritzt ist, dessen Innendurchmesser dem Außendurchmesser des zylindrischen Körpers (18) in dem nicht verbreiterten Abschnitt entspricht, und der ebenfalls an dem den Werkstücken (12, 14) abgewandten Ende einen verbreiterten Abschnitt (26) aufweist, wobei das Gummi- oder Kunststoffteil (24) im nicht montierten Zustand der Mutter (10) werkstücksseitig über den Körper (18) der Mutter (10) auf die Werkstücke (12, 14) hin vorsteht.

## Beschreibung

### Technisches Gebiet

Die vorliegende Erfindung betrifft eine Spezialmutter. Aufgrund der im Automobilbau zunehmenden Gewichtsrestriktionen werden dort zunehmend Bauteile aus Leichtmetallen verwendet. Es stellt sich dann häufig das Problem, eine Verbindung zwischen den immer noch weithin üblichen Stahlteilen und entsprechenden Leichtmetallbauteilen herzustellen, wobei jedoch eine direkte Berührung zwischen Stahl- und Leichtmetallteilen wegen der Gefahr der elektrochemischen Korrosion auf jeden Fall vermieden werden muss. Weiterhin müssen diese Verbindungen häufig einen Längen- und Toleranzausgleich, insbesondere zum Ausgleich der thermischen Expansion bestimmter thermisch beanspruchter Bauteile erlauben und somit muss eine gewisse seitliche Bewegung der Verbindung sowie eine leichte Winkelverschiebung möglich sein. Selbstverständlich müssen solche Verbindungen auch, wie in der Automobilindustrie allgemein gefordert, erschütterungsbeständig sein, so dass sie auch bei starken Erschütterungen sich nicht lösen und keine Geräusche verursachen.

### Stand der Technik

Die vorliegende Erfindung ist dabei aus der Aufgabe hervorgegangen, einen vollständig aus Aluminium bestehenden Kühler mit entsprechenden Stahlträgern der Karosserie zu verbinden. Hierbei kann der Kühler Temperaturen zwischen -25 und +175 °C aufweisen, wodurch sich der Kühler bis zu 1,2 mm ausdehnt. Diese Ausdehnung, und die damit verbundene seitliche Verschiebung der Verbindung muss durch eine erfindungsgemäße Mutter ausgeglichen werden. Des Weiteren muss die Mutter auch leichte Verschwenkungen der verbundenen Werkstücke aufgrund von Beschleunigungs- oder Bremsvorgängen des Fahrzeugs ausgleichen.

Schließlich sollte die entsprechende Mutter leicht an dem Kühler im Zuge des Herstellungsvorganges des Kühlers montierbar sein und während des Transports des Kühlers zu dem Fließband, an dem das Fahrzeug gefertigt wird, im unmontierten Zustand sicher in dem Kühler verbleiben.

### Darstellung der Erfindung

Erfindungsgemäß wird die vorliegende Aufgabe durch eine Spezialmutter zur schwingungsgedämpften und elektrokorrosionsfreien Verbindung von Werkstücken aus unterschiedlichen Metallen mit Winkel- und Verschiebungstoleranzausgleich gelöst, wobei die Mutter aus einem im Wesentlichen zylindrischen Körper mit einer zentralen zentrischen Bohrung mit einem Innengewinde besteht, der an dem den Werkstücken abgewandten Ende einen verbreiterten Abschnitt aufweist, wobei werkstückseitig ein hohlzylindrisches, elastisch komprimierbares Gummi- oder Kunststoffteil auf den nicht verbreiterten Abschnitt dieses zylindrischen Körpers aufgesetzt oder aufgespritzt ist, dessen Innendurchmesser dem Außendurchmesser des zylindrischen Körpers in dem nicht verbreiterten Abschnitt entspricht, und der ebenfalls an dem den Werkstücken abgewandten Ende einen verbreiterten Abschnitt aufweist, wobei das Gummi- oder Kunststoffteil im nicht montierten Zustand der Mutter werkstückseitig über den Körper der Mutter auf die Werkstücke hin vorsteht, und der verbreiterte Abschnitt "T-förmig" ausgebildet ist.

Dabei ist es besonders bevorzugt, dass der Außendurchmesser des verbreiterten Abschnitts des Gummi- oder Kunststoffteils größer oder gleich dem Außendurchmesser des verbreiterten Abschnitts des Mutternkörpers ist, da auf diese Weise eine besonders gute Isolation gegen elektrochemische Korrosionsvorgänge zwischen den unterschiedlichen Materialien der Mutter und des mutternseitigen Werkstücks sichergestellt ist.

Besonders bevorzugt ist es dabei, wenn der nicht verbreiterte Abschnitt des Gummi- oder Kunststoffteils an seiner Mantelfläche mit Lippen versehen ist, durch die die Mutter vor der Endmontage in dem mutterseitigen Werkstück fixierbar ist. Auf diese Weise kann die Mutter bereits in das mutterseitige Werkstück bei der Herstellung dieses Werkstücks eingesetzt werden, und bis zur Endmontage des Werkstücks dort verbleiben. Auf diese Weise wird die Endmontage erheblich erleichtert.

### Kurze Beschreibung der Abbildungen der Zeichnungen

Die vorliegende Erfindung wird im Folgenden an Hand des in den Zeichnungen dargestellten Ausführungsbeispieles näher erläutert. Es zeigt:

FIGUR 1 eine teilweise geschnittene Darstellung einer erfindungsgemäßen Mutter und

FIGUR 2 eine räumliche Explosionszeichnung der erfindungsgemäßen Mutter der Figur 1.

### Bester Weg zur Ausführung der Erfindung

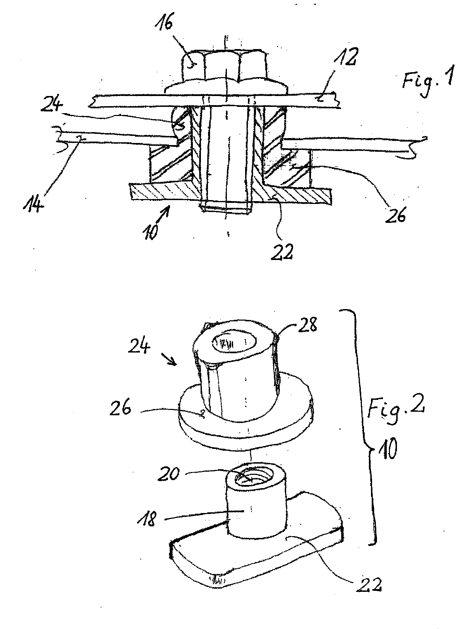

Wie in Figur 1 dargestellt, bezieht sich die vorliegende Erfindung auf eine Spezialmutter 10, die hier zur Verbindung zweier Bauteile 12, 14 dient. Das der Mutter abgewandte Bauteil 12 ist dabei ein übliches Stahlbauteil, das mutterseitige Bauteil 14 besteht in der dargestellten Ausführungsform aus Aluminium. Selbstverständlich kann es sich dabei jedoch auch um jedes andere Leichtmetall oder eine andere Leichtmetalllegierung handeln. Aufgabe der vorliegenden Erfindung ist es nun, eine Mutter zur Verbindung dieser beiden Bauteile 12, 14 herzustellen, bei der jedoch sichergestellt sein muss, dass das Leichtmetallbauteil 14 keinesfalls mit dem Stahlbauteil 12 oder einer Schraube 16, die zum Verschrauben der Verbindung dient, in Berührung kommt. Ebenso wenig darf das Bauteil 14 jedoch mit den stählernen Teilen der Mutter 10 in Berührung kommen, da jede solche Berührung zur Gefahr erheblicher elektrochemischer Korrosionseffekte führt, die zur vorzeitigen Zerstörung des Leichtmetallbauteils 14 führen können.

Die Mutter 10 besteht erfindungsgemäß aus einem im Wesentlichen zylindrischen Körper 18 mit einer zentralen zentrischen Bohrung 20 mit einem Innengewinde. An dem den Werkstücken abgewandten Ende der Mutter weist der zylindrische Körper 18 einen erheblich verbreiterten Abschnitt 22 auf. Erfindungsgemäß ist dieser "T-förmig" ausgebildet, um ein Verdrehen der Mutter gegenüber dem Bauteil 14 durch entsprechende konstruktive Gestaltung des Bauteils 14 verhindern zu können.

Auf dem nicht verbreiterten Abschnitt des zylindrischen Körpers 18 ist ein hohlzylindrisches Teil aus elastisch komprimierbarer Gummi- oder Kunststoffmasse aufgesetzt oder aufgespritzt. Der Innendurchmesser dieses Teils 24 entspricht dabei dem Außendurchmesser des zylindrischen Körpers 18 in dem nicht verbreiterten Abschnitt. Auch das Teil 24 weist an dem den Werkstücken 12, 14 abgewandten Ende einen verbreiterten Abschnitt 26 auf.

Das Gummi- oder Kunststoffteil 24 wird dabei entweder durch einen Presssitz auf dem nicht verbreiterten Abschnitt des zylindrischen Körpers 18 gehalten, oder im Spritzgussverfahren auf diesen aufgespritzt.

Entscheidend für die vorliegende Erfindung ist, dass das Gummi- oder Kunststoffteil 24 im nicht verschraubten Zustand der Mutter 10 am werkstückseitigen Ende ein Stück über dem zylindrischen Körper 18 hinaus steht.

Des Weiteren kann das Gummi- oder Kunststoffteil 24 mit längs verlaufenden Lippen 28 aus dem gleichen Material versehen sein, wobei die Lippen parallel zu der zentrischen Bohrung mit gleichem Abstand über die Mantelfläche des nicht verbreiterten Abschnitts des Teils 24 verteilt angeordnet sein können. Besonders bevorzugt ist es dabei, wenn drei solche Lippen vorgesehen werden.

Die Figur 2 zeigt eine entsprechende dreidimensionale Explosionszeichnung, mittels derer die Form des Metallteils und des Gummi- oder Kunststoffteils der Mutter 10 sowie die Bohrung 20 mit dem Innengewinde sowie die Gestaltung der Mantelfläche des Gummi- oder Kunststoffteils 24 mit den Lippen 28 nochmals im Einzelnen verdeutlicht wird.

Im Folgenden soll nun die erfindungsgemäße Verbindung an Hand der Figur 1 näher erläutert werden.

Die Mutter 10 wird zuerst ein eine Öffnung in dem Leichtmetall-Bauteil 14 eingesetzt. Diese Öffnung muss einen Innendurchmesser aufweisen, der dem Außendurchmesser des Gummi- oder Kunststoffteils 24 (ohne die Berücksichtigung eventueller Lippen 28) entspricht. Sofern das Teil 24 mit Lippen 28 versehen ist, ist die Mutter 10 bereits nach dem Einsetzen in das Bauteil 14 gegen Herausfallen oder Verlust gesichert, wenn das Bauteil 14 noch weiter gelagert oder transportiert wird.

Später wird dann das Bauteil 14 in üblicher Weise durch Verschrauben mit dem Bauteil 12 verbunden. Das Bauteil 12 kann dazu eine übliche Bohrung für die ebenfalls handelsübliche Schraube 16 aufweisen. Durch das Verschrauben wird das vorher über den zylindrischen Körper 18 der Mutter vorstehende Gummi- oder Kunststoffteil 24 komprimiert, so dass sein Durchmesser, wie in Figur 1 dargestellt, zunimmt. Dadurch wird das Bauteil 14 zwischen dem verbreiterten Abschnitt 26 und dem nunmehr komprimierten und zur Seite ausweichenden Bereich des Gummi- oder Kunststoffteils 24 eingezwängt. Das Bauteil 12 hingegen ist in üblicher Weise zwischen der Schraube 16 und dem zylindrischen Körper 18 der Mutter 10 fest verschraubt.

Auf diese Weise ist sichergestellt, dass stets ein ausreichender Abstand zwischen dem Bauteil 14 aus Leichtmetall und dem Stahlteilbauteil 12, Mutternkörper 18 und Schraube 16 besteht, um somit jegliche elektrochemische Korrosion zu verhindern. Des Weiteren ist auch eine hervorragende Vibrationsdämpfung sichergestellt. Darüber hinaus kann durch die Elastizität des Teils 24 eine seitliche Verschiebung, beispielsweise durch thermische Ausdehnung des Bauteils 14 oder eine Winkellageverschiebung der Bauteile 12 und 14 gegeneinander ausgeglichen werden.

Bei Bedarf kann die Verbindung durch Verwendung einer Schraube 16 mit einem entsprechenden Klebstoffüberzug zusätzlich gesichert werden.

## Patentansprüche

1. Spezialmutter (10) zur schwingungsgedämpften und elektrokorrosionsfreien Verbindung von Werkstücken (12, 14) aus unterschiedlichen Metallen mit Winkel- und Verschiebungstoleranzausgleich, wobei die Mutter (10) aus einem im Wesentlichen zylindrischen Körper (18) mit einer zentralen zentrischen Bohrung (20) mit einem Innengewinde besteht, der an dem den Werkstücken (12, 14) abgewandten Ende einen verbreiterten Abschnitt (22) aufweist, wobei werkstücksseitig ein hohlzylindrisches, elastisch komprimierbares Gummi- oder Kunststoffteil (24) auf den nicht verbreiterten Abschnitt dieses zylindrischen Körpers (18) aufgesetzt oder aufgespritzt ist, dessen Innendurchmesser dem Außendurchmesser des zylindrischen Körpers (18) in dem nicht verbreiterten Abschnitt entspricht, und der ebenfalls an dem den Werkstücken (12, 14) abgewandten Ende einen verbreiterten Abschnitt (26) aufweist, wobei das Gummi- oder Kunststoffteil (24) im nicht montierten Zustand der Mutter (10) werkstücksseitig über den Körper (18) der Mutter (10) auf die Werkstücke (12, 14) hin vorsteht, **dadurch gekennzeichnet, dass** der verbreiterte Abschnitt (22) "T-förmig" ausgebildet ist.

2. Spezialmutter nach Anspruch 1, **dadurch gekennzeichnet, dass** der Außendurchmesser des verbreiterten Abschnitts (26) des Gummi- oder Kunststoffteils (24) größer oder gleich dem Außendurchmesser des verbreiterten Abschnitts (22) des Mutternkörpers (18) ist.

3. Spezialmutter nach Anspruch 1 oder 2, **dadurch gekennzeichnet, dass** der nicht verbreiterte Abschnitt des Gummi- oder Kunststoffteils (24) an seiner Mantelfläche mit Lippen (28) versehen ist.
